(19) **Europäisches Patentamt / European Patent Office / Office européen des brevets**

(11) **EP 1 595 058 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: **03701436.2**

(22) Anmeldetag: **19.02.2003**

(51) Int Cl.:
**F01D 11/00** *(2006.01)* **F16J 15/08** *(2006.01)*

(86) Internationale Anmeldenummer:
**PCT/CH2003/000124**

(87) Internationale Veröffentlichungsnummer:
**WO 2004/074640 (02.09.2004 Gazette 2004/36)**

(54) **DICHTUNGSANORDNUNG, INSBESONDERE FÜR DIE SCHAUFELSEGMENTE VON GASTURBINEN**

SEALING ARRANGEMENT, PARTICULARLY FOR THE BLADE SEGMENTS OF GAS TURBINES

SYSTEME DE JOINT NOTAMMENT DESTINE A DES SEGMENTS D'AILETTES DE TURBINES A GAZ

(84) Benannte Vertragsstaaten:
**AT BE BG CH CY CZ DE DK EE ES FI FR GB GR HU IE IT LI LU MC NL PT SE SI SK TR**

(43) Veröffentlichungstag der Anmeldung:
**16.11.2005 Patentblatt 2005/46**

(73) Patentinhaber: **Alstom Technology Ltd 5400 Baden (CH)**

(72) Erfinder:
- **LONDON, Richard**
  **CH-5507 Mellingen (CH)**
- **MARX, Peter**
  **CH-5400 Baden (CH)**

(56) Entgegenhaltungen:
**EP-A- 0 896 128**     **GB-A- 2 296 295**
**US-A- 3 752 598**     **US-A- 5 868 398**

**Beschreibung**

TECHNISCHES GEBIET

Die vorliegende Erfindung bezieht sich auf das Gebiet der thermischen Maschinen. Sie betrifft eine Dichtungsanordnung, insbesondere für die Schaufelsegmente einer Gasturbine, gemäss dem Oberbegriff des Anspruchs 1.

Eine solche Dichtungsanordnung ist z.B. aus der Druckschrift EP-A2-0 896 128 oder US-A-3 752 598 bekannt.

STAND DER TECHNIK

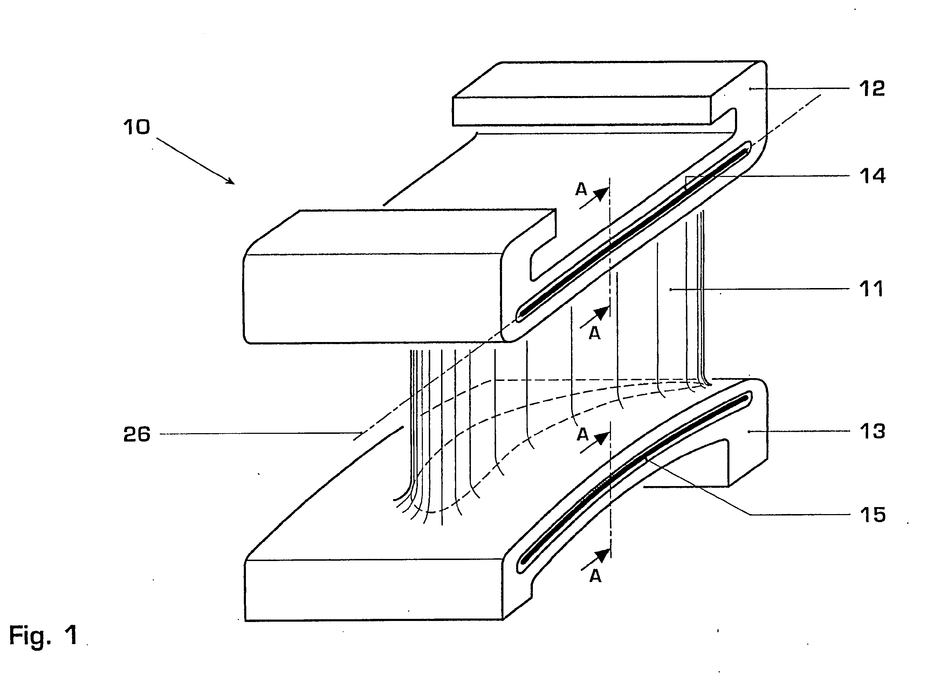

Turbinenstufen von Gasturbinen umfassen Reihen von Leitschaufeln (Stator) und Laufschaufeln (Rotor). Diese Reihen sind jeweils aus einer bestimmten Anzahl von Schaufelsegmenten aufgebaut. Ein solches Leitschaufelsegment ist in Fig. 1 in perspektivischer Seitenansicht wiedergegeben. Zentraler Teil des Leitschaufelsegments 10 aus Fig. 1 ist das eigentliche Schaufelprofil 11, dass an beiden Enden durch plattformartige Deckbandsegmente 12, 13 begrenzt ist. Das äussere Deckbandsegment 12 bildet zusammen mit den äusseren Deckbandsegmenten der anderen Schaufeisegmente der Reihe ein ringförmiges äusseres Schaufeldeckband. Das innere Deckbandsegment 13 bildet entsprechend zusammen mit den inneren Deckbandsegmenten der anderen Schaufelsegmente der Reihe ein ringförmiges inneres Schaufeldeckband. Zwischen den inneren und äusseren Schaufeldeckbändern wird ein Ringkanal gebildet, durch den das heisse Arbeitsmedium der Gasturbine strömt. Ausserhalb des Ringkanals strömt üblicherweise Kühlluft, die von dem heissen Arbeitsmedium durch die Schaufeldeckbänder getrennt ist.

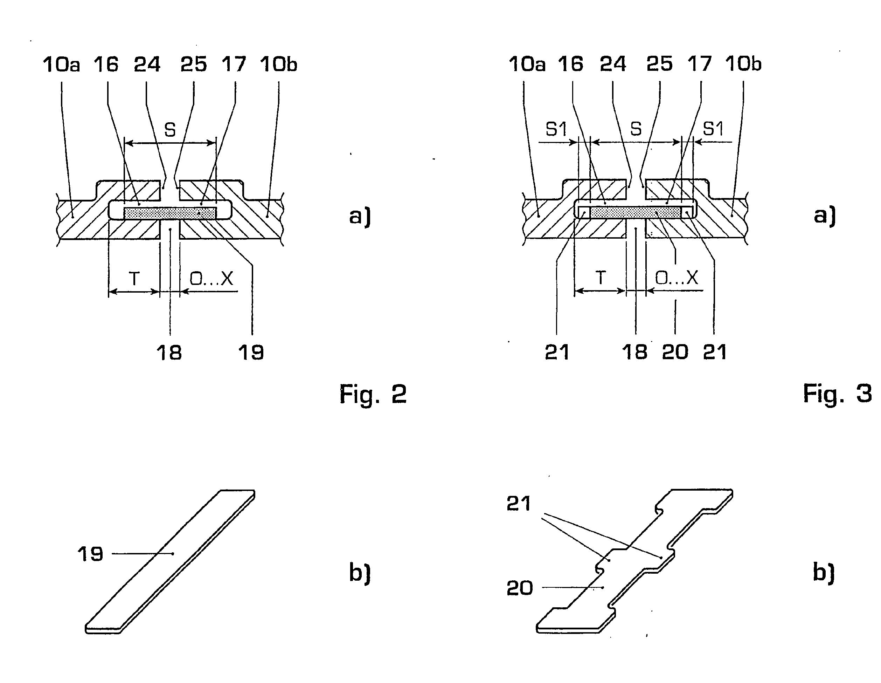

An den Stirnseiten der Deckbandsegmente 12, 13 sind in Richtung einer Längsachse 26 verlaufende äussere und innere Deckbanddichtungen 14 bzw. 15 vorgesehen, die zur Abdichtung der Zwischenräume (Spalte) zwischen benachbarten Deckbandsegmenten dienen. Der Querschnitt durch eine solche bekannte Dichtungsanordnung entlang der Ebene A-A in Fig. 1 ist in Fig. 2(a) dargestellt. Gemäss Fig. 2(a) grenzen zwei benachbarte Leitschaufelsegmente 10a und 10b im Bereich der Deckbandsegmente mit ihren Stirnseiten 24, 25 unter Bildung eines Spaltes 18 aneinander. In den Stirnseiten 24, 25 der Leitschaufelsegmente 10a, 10b sind senkrecht zum Spalt 18 in Richtung der Längsachse 26 verlaufende Nuten 16, 17 angeordnet, die einen Dichtungsstreifen 19 (mit Spiel) aufnehmen. Die Nuten 16, 17 können beispielsweise durch EDM (Electrical Discharge Machining), Schleifen oder Fräsen in die Segmente eingebracht sein. Der rechteckige, ebene Dichtungsstreifen 19 ist in Fig. 2(b) in perspektivischer Seitenansicht wiedergegeben.

Wegen der thermischen Ausdehnung im Betrieb müssen die benachbarten Segmente mit einem nominalen Spiel im kalten Zustand ausgelegt werden, um die thermische Ausdehnung aufnehmen zu können. Das nominale Spiel wird durch Toleranzen überlagert, die sich aus der Art der Umfangsbefestigung der Segmente ergeben. Insgesamt ergibt sich ein Spiel in Form eines Spaltes 18, dessen Breite Werte zwischen 0 und einer maximalen Breite (maximales Spiel) X annehmen kann (siehe Fig. 2(a)). Das nominale Spiel beträgt üblicherweise 1...3 mm, das maximale Spiel (X) 3...5 mm. Die Nuten 16, 17 haben jeweils eine Tiefe T, der Dichtungsstreifen 19 hat eine Basisbreite S (siehe Fig. 2(a)). Tiefe T und Basisbreite S müssen bestimmten Bedingungen genügen, damit der Dichtungsstreifen 19 nicht aus den Nuten herausfallen kann (bei maximalem Spiel X) oder zusammengequetscht wird (bei Spiel 0):

$$(1) \qquad\qquad S \le 2 \cdot T \,.$$

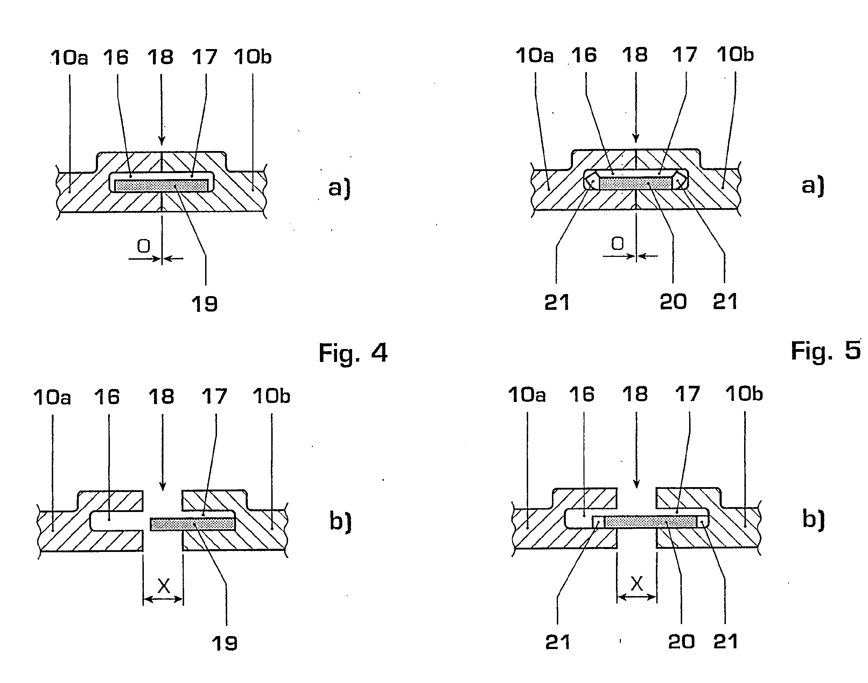

Wenn die Bedingung (1) erfüllt ist, wird der Dichtungsstreifen 19 auch dann nicht in Querrichtung belastet, wenn das Spiel bzw. die Breite des Spaltes 18 Null ist (siehe die Darstellung in Fig. 4(a)).

$$(2) \qquad\qquad S - T \ge X \,.$$

Wenn die Bedingung (2) erfüllt ist, wird die in Fig. 4(b) dargestellte Situation vermieden, in welcher der Dichtungsstreifen 19 aus den Nuten 16, 17 herausfallen oder so im Spalt 18 verkanten kann, dass er bei einer anschliessenden Verkleinerung des Spiels deformiert und beschädigt wird.

Nachteilig ist bei dieser Art der Dimensionierung, dass die Tiefe T der Nuten 16, 17 und die Breite S des Dichtungsstreifens 19 in Abhängigkeit von der maximalen Breite X des Spaltes 18 bzw. dem maximalen Spiel sehr gross werden kann. Die Tiefe T der Nuten 16, 17 und die Breite der Dichtung können jedoch durch das Herstellungsverfahren, die vorgegebene Geometrie oder die Kühlungsanforderungen der Stirnseiten 24, 25 der Segmente begrenzt sein. In diesen Fällen muss dann ein Kompromiss gefunden oder eine andere Dichtungsmethode eingesetzt werden.

## DARSTELLUNG DER ERFINDUNG

Es ist daher Aufgabe der Erfindung, eine insbesondere für die Schaufelsegmente von Gasturbinen anwendbare Dichtungsanordnung anzugeben, welche die Nachteile bekannter Dichtungsanordnungen vermeidet und sich insbesondere dadurch auszeichnet, dass mit vergleichsweise geringem Aufwand ein grösseres maximales Spiel zwischen den angrenzenden Körpern bzw. Segmenten sicher aufgefangen werden kann.

Die Aufgabe wird durch die Gesamtheit der Merkmale des Anspruchs 1 gelöst. Der Kern der Erfindung besteht darin, ausgehend von der üblichen Form des Dichtungsstreifens zusätzliche Mittel am Dichtungsstreifen vorzusehen, welche ein Herausgleiten des Dichtungsstreifens aus den Nuten verhindert, wenn die Summe aus der maximalen Breite des Spaltes und der Tiefe der Nuten grösser oder gleich der Basisbreite des Dichtungsstreifens ist.

Eine bevorzugte Ausgestaltung der Erfindung zeichnet sich dadurch aus, dass die zusätzlichen Mittel an den Längsseiten des Dichtungsstreifens verteilt angeordnete in Richtung der Längsachse begrenzte Laschen umfassen, welche lokal die Breite des Dichtungsstreifens über die Basisbreite hinaus um eine vorgegebene zusätzliche Breite vergrössern. Die Laschen vergrössern mit ihrer zusätzlichen Breite einerseits das durch den Dichtungsstreifen sicher überbrückbare maximale Spiel. Andererseits können die Laschen durch Umbiegen lokal nachgeben, wenn beim Spiel Null Querkräfte auf den Dichtungsstreifen einwirken.

Bevorzugte sind wenigstens zwei Laschen an einer Längsseite des Dichtungsstreifens über die Längsseite verteilt angeordnet. Insbesondere sind die wenigstens zwei Laschen an den Enden der Längsseite angeordnet. Auf diese Weise ergibt sich zu jeder Zeit eine stabile und vorbestimmte Lage des Dichtungsstreifens in den Nuten.

Besonders günstig ist eine Geometrie, bei der die Laschen paarweise einander gegenüberliegend an den beiden Längsseiten des Dichtungsstreifens angeordnet sind.

Die Laschen sind vorzugsweise am Dichtungsstreifen angeformt und weisen dieselbe Dicke auf wie der Dichtungsstreifen.

Die Laschen können dabei im Ausgangszustand in der Ebene des Dichtungsstreifens liegen. Sie können aber auch im Ausgangszustand aus der Ebene des Dichtungsstreifens herausgebogen sein.

Besonders platzsparend und wenig belastend für den Dichtungsstreifen ist die Dichtungsanordnung, wenn gemäss einer anderen Ausgestaltung zur Aufnahme der Laschen an den entsprechenden Stellen der Nuten tiefergehende Taschen ausgebildet sind.

Im einfachsten Fall können die Wände der Nuten senkrecht zum Spalt orientiert sein.

Es ist aber auch denkbar, dass die Wände der Nuten einseitig oder beidseitig schräg zum Spalt orientiert sind, derart, dass die Nuten ein V-förmiges Querschnittsprofil aufweisen.

Weitere Ausführungsformen ergeben sich aus den abhängigen Ansprüchen.

## KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in einer perspektivischen Seitenansicht ein Leitschaufelsegment einer Gasturbine nach dem Stand der Technik.

Fig. 2 in zwei Teilfiguren den Querschnitt durch eine bekannte Dichtungsanordnung in der Ebene A-A der Fig. 1 (Teilfigur (a)) sowie die perspektivische Seitenansicht des zugehörigen Dichtungsstreifens (Teilfigur (b)).

Fig. 3 in einer zu Fig. 2 vergleichbaren Darstellung ein bevorzugtes Ausführungsbeispiel der erfindungsgemässen Dichtungsanordnung;

Fig. 4 in einer zu Fig. 2(a) vergleichbaren Darstellung die Extremfälle des verschwindenden Spiels (Teilfigur (a)) und des maximalen Spiels (Teilfigur (b)) bei der Dichtungsanordnung aus dem Stand der Technik;

Fig. 5 in der zu Fig. 4 vergleichbaren Darstellung das Verhalten der Dichtungsanordnung aus Fig. 3;

Fig. 6 in drei Teilfiguren (a), (b) und (c) verschiedene Konfigurationen der Nuten bei einer Dichtungsanordnung nach der Erfindung;

Fig. 7 in zwei Teilfiguren (a), (b) unterschiedliche Formen des Dichtungsstreifens für die Dichtungsanordnung nach Fig. 3 oder 6; und

Fig. 8 in drei Teilfiguren (a), (b) und (c) verschiedene Konfigurationen der Nuten und Dichtungsstreifen bei einer Dichtungsanordnung nach der Erfindung.

WEGE ZUR AUSFÜHRUNG DER ERFINDUNG

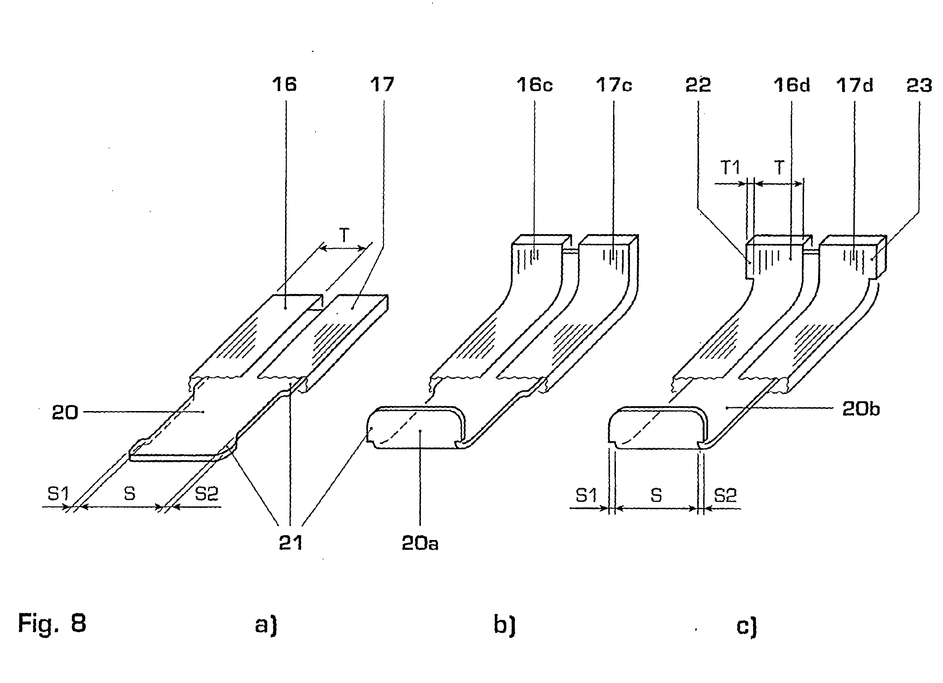

In Fig. 3 ist ein bevorzugtes Ausführungsbeispiel der erfindungsgemässen Dichtungsanordnung in einer zu Fig. 2 vergleichbaren Darstellung wiedergegeben. Gleiche Teile sind dabei mit den gleichen Bezugszeichen versehen. Der einfach rechteckige Dichtungsstreifen 19 aus Fig. 2 ist in Fig. 3 ersetzt durch einen Dichtungsstreifen 20, der an den Längsseiten verteilt eine Mehrzahl von angeformten Laschen 21 aufweist. Die Laschen 21 verleihen dem Dichtungsstreifen 20 - wie dies in Fig. 8(a) anschaulich zu sehen ist - lokal auf beiden Seiten zusätzlich zur Basisbreite S eine Breite S1 bzw. S2. Im einfachsten Fall symmetrischer Laschenpaare ist S1 = S2. Bei geeigneter Dimensionierung von S1, S2 spielt die zusätzliche Breite bei minimalem Spiel = 0 keine Rolle, weil die Laschen 21 dann durch die Querkräfte umgebogen werden und die zusätzliche Breite des Dichtungsstreifens 20 weitgehend verschwindet (Fig. 5 (a)). Bei maximalem Spiel X (Fig. 5(b)) kann dagegen durch die zusätzliche Breite S1+S2=2·S1 vergrössert sich der noch sicher tolerierbare Wert von X entsprechend. Es gilt also nach wie vor die eingangs genannte Bedingung (1) bei Spiel Null. Bei maximalem Spiel X gilt dagegen wegen der zusätzlichen Breite:

$$(3) \qquad\qquad S + 2 \cdot S1 - T \geq X \,.$$

Aus der Bedingung (3) folgt direkt, dass gegenüber der bekannten Dichtungsanordnung (siehe Bedingung (2)) bei gleichbleibenden Werten von S und T grössere Werte von X toleriert werden können, ohne dass die Dichtungsanordnung bzw. der Dichtungsstreifen 20 gefährdet ist. Sind die Laschen 21 (bei Spiel Null) erst einmal nach oben (oder unten) gebogen, geht die zusätzliche Breite des Dichtungsstreifens 20 zwar weitgehend verloren und damit auch die Fähigkeit, ein grösseres maximales Spiel X ohne Probleme aufzufangen, jedoch kann der Dichtungsstreifen 20 nach wie vor wie ein herkömmlicher (Standard-)Dichtungsstreifen der Breite S eingesetzt werden.

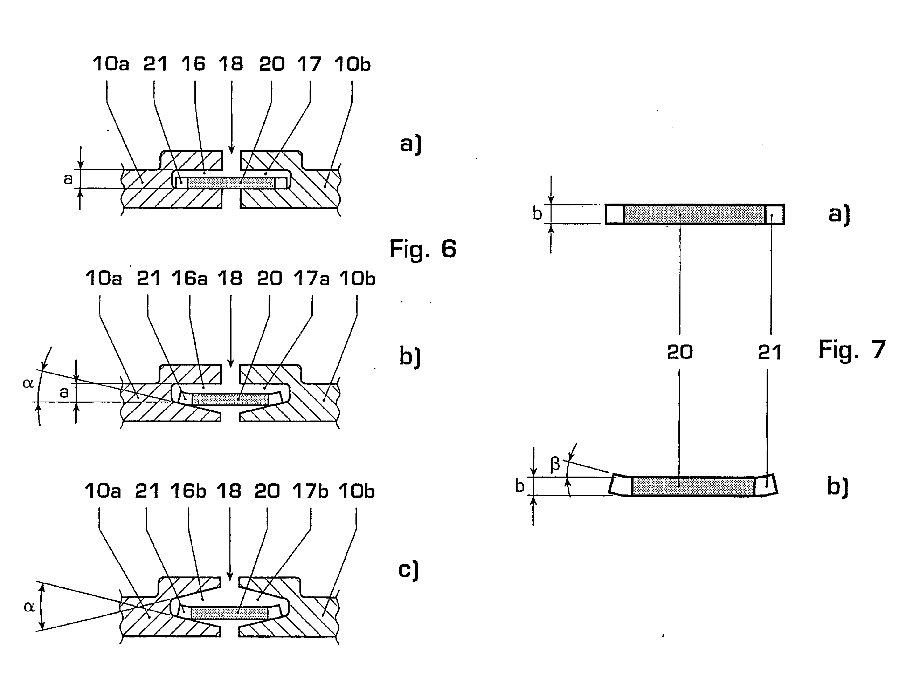

Im Ausführungsbeispiel gemäss Fig. 3(b) sind die Laschen 21 auf beiden Längsseiten des Dichtungsstreifens 20 verteilt angeordnet. Dabei ist jeweils ein Paar gegenüberliegender Laschen 21 an den Enden des Dichtungsstreifens 20 und ein Paar in der Mitte vorgesehen. Diese symmetrische Verteilung sorgt dafür, dass die vergrösserte Breite mit nur wenigen Laschen über die gesamte Länge des Dichtungsstreifens 20 wirksam wird. Es ist aber auch denkbar, mehr oder weniger Laschen vorzusehen, oder die Laschen 21 nur auf einer Seite des Dichtungsstreifens oder alternierend auf beiden Seiten anzuordnen. Besonders einfach herzustellen sind Laschen 21, die am Dichtungsstreifen 20 angeformt sind und dieselbe Dicke b aufweisen, wie der Dichtungsstreifen 20 (Fig. 7). Sie können durch eine entsprechende Auslegung der Randkontur des Dichtungsstreifens 20 erzeugt werden. Es ist aber auch denkbar, die Laschen 21 als separate Elemente am Dichtungsstreifen 20 anzubringen, um sie unabhängig vom Dichtungsstreifen 20 optimieren zu können. Ebenso ist es denkbar, anstelle der Laschen 21 andere Elemente einzusetzen, die seitlich über den Dichtungsstreifen 20 hinausstehen.

Weiterhin ist es denkbar, gemäss Fig. 7(b) Dichtungsstreifen 20 mit Laschen 21 einzusetzen, die bereits aus der Ebene des Dichtungsstreifens 20 heraus um einen Winkel β zu einer Seite herausgebogen sind. Derartige Dichtungsstreifen mit vorgebogenen Laschen haben den Vorteil, dass sich der Biegevorgang im Fall der Fig. 5(a) (Spiel 0) in geordneter Weise vollzieht. Ein solcher vorgebogener Dichtungsstreifen 20 kann aber auch mit Vorteil in einer Dichtungsanordnung eingesetzt werden, wie sie in Fig. 6(b) und (c) dargestellt ist. Bei diesen Dichtungsanordnungen sind anstelle der Nuten 16, 17 mit zum Spalt 18 senkrechten Wänden und der Breite a Nuten 16a, 17a bzw. 16b, 17b vorgesehen, deren Wände einseitig oder beidseitig unter einem Winkel a schräg zum Spalt 18 orientiert sind, derart, dass die Nuten 16a, 17a bzw. 16b, 17b ein V-förmiges Querschnittsprofil aufweisen. Durch die vorgebogenen Laschen 21 ergibt sich hier eine verbesserte Lage des Dichtungsstreifens 20 in den Nuten.

Es ist aber auch denkbar, anstelle der ebenen Dichtungsstreifen 20 aus Fig. 8(a) Dichtungsstreifen 20a, 20b gemäss Fig. 8(b) und (c) einzusetzen, die an den Enden abgebogen sind. Zur Aufnahme derart abgebogener Dichtungsstreifen 20a, 20b müssen entsprechend gebogene Nuten 16c, 17c bzw. 16d, 17d vorgesehen werden.

Eine weitere Abwandlung, die in Fig. 8(c) anhand eines an den Enden gebogenen Dichtungsstreifens 20b gezeigt ist, aber auch bei ebenen Dichtungsstreifen eingesetzt werden kann, besteht darin, in den Nuten 16d, 17d Taschen 22, 23 mit einer zusätzlichen Tiefe T1 zur Aufnahme der Laschen 21 vorzusehen. Hierdurch wird ein Umbiegen der Laschen 21 bei Spiel 0 vermieden, ohne dass die durch die Laschen 21 bedingte Vergrösserung des maximalen Spiels X verloren geht. Erkauft wird dieser Vorteil allerdings mit einer aufwendigeren Herstellung der Nuten 16d, 17d.

BEZUGSZEICHENLISTE

| 10 | Leitschaufelsegment |
| 10a,b | Leitschaufelsegment |
| 11 | Schaufel profil |
| 12 | äusseres Deckbandsegment |
| 13 | inneres Deckbandsegment |
| 14 | äussere Deckbanddichtung |
| 15 | innere Deckbanddichtung |
| 16,17 | Nut |
| 16a,17a | Nut |
| 16b,17b | Nut |
| 16c,17c | Nut |
| 16d,17d | Nut |
| 18 | Spalt |
| 19,20 | Dichtungsstreifen |
| 20a,b | Dichtungsstreifen |
| 21 | Lasche |
| 22,23 | Tasche |
| 24,25 | Stirnseite |
| 26 | Längsachse |
| a | Breite (Nut) |
| b | Dicke (Dichtungsstreifen) |
| S | Basisbreite (Dichtungsstreifen) |
| S1,2 | Breite (Laschen) |
| T | Tiefe (Nut) |
| T1,2 | Tiefe (Taschen) |
| X | max. Breite (Spalt) |
| $\alpha,\beta$ | Winkel |

## Patentansprüche

**1.** Dichtungsanordnung, insbesondere für die Schaufelsegmente von Gasturbinen, bei welcher Dichtungsanordnung zwei Körper (10a, 10b) mit zwei sich entlang einer Längsachse (26) erstreckenden Stirnseiten (24, 25) unter Bildung eines Spaltes (18) aneinandergrenzen, dessen Breite zwischen Null und einer maximalen Breite (X) variieren kann, und bei welcher der Spalt (18) durch einen quer zum Spalt (18) liegenden, sich entlang der Längsachse (26) erstreckenden Dichtungsstreifen (20, 20a, 20b) abgedeckt wird, der mit Spiel in zwei gegenüberliegenden, quer zum Spalt (18) in die Stirnseiten (24, 25) der Körper (10a, 10b) eingelassenen Nuten (16, 17; 16a, 17a;....;16d, 17d) einer vorgegebenen Tiefe (T) gelagert ist, wobei der Dichtungsstreifen (20, 20a, 20b) eine Basisbreite (S) quer zur Längsachse (26) aufweist, welche kleiner oder gleich der doppelten Tiefe der Nuten (16, 17; 16a, 17a;....;16d, 17d) ist, **dadurch gekennzeichnet, dass** der Dichtungsstreifen (20, 20a, 20b) zusätzliche Mittel (21) aufweist, welche ein Herausgleiten des Dichtungsstreifens (20, 20a, 20b) aus den Nuten (16, 17; 16a, 17a;....;16d, 17d) verhindert, wenn die Summe aus der maximalen Breite (X) des Spaltes (18) und der Tiefe (T) der Nuten (16, 17; 16a, 17a;....; 16d, 17d) grösser oder gleich der Basisbreite (S) des Dichtungsstreifens (20, 20a, 20b) ist.

**2.** Dichtungsanordnung nach Anspruch 1, **dadurch gekennzeichnet, dass** die zusätzlichen Mittel an den Längsseiten des Dichtungsstreifens (20, 20a, 20b) verteilt angeordnete, in Richtung der Längsachse (26) begrenzte Laschen (21) umfassen, welche lokal die Breite des Dichtungsstreifens (20, 20a, 20b) über die Basisbreite (S) hinaus um eine vorgegebene zusätzliche Breite (S1, S2) vergrössern.

**3.** Dichtungsanordnung nach Anspruch 2, **dadurch gekennzeichnet, dass** wenigstens zwei Laschen (21) an einer Längsseite des Dichtungsstreifens (20, 20a, 20b) über die Längsseite verteilt angeordnet sind.

**4.** Dichtungsanordnung nach Anspruch 3, **dadurch gekennzeichnet, dass** die wenigstens zwei Laschen (21) an den Enden der Längsseite angeordnet sind.

**5.** Dichtungsanordnung nach Anspruch 4, **dadurch gekennzeichnet, dass** in der Mitte zwischen den wenigstens zwei Laschen (21) wenigstens eine zusätzlich Lasche (21) angeordnet ist.

**6.** Dichtungsanordnung nach einem der Ansprüche 2 bis 5, **dadurch gekennzeichnet**, das die Laschen (21) paarweise einander gegenüberliegend an den beiden Längsseiten des Dichtungsstreifens (20, 20a, 20b) angeordnet sind.

**7.** Dichtungsanordnung nach einem der Ansprüche 2 bis 6, **dadurch gekennzeichnet, dass** die Laschen (21) am Dichtungsstreifen (20, 20a, 20b) angeformt sind und dieselbe Dicke aufweisen wie der Dichtungsstreifen (20, 20a, 20b).

**8.** Dichtungsanordnung nach einem der Ansprüche 2 bis 7, **dadurch gekennzeichnet, dass** die Laschen (21) im Ausgangszustand in der Ebene des Dichtungsstreifens (20, 20a, 20b) liegen.

**9.** Dichtungsanordnung nach einem der Ansprüche 2 bis 7, **dadurch gekennzeichnet, dass** die Laschen (21) im Ausgangszustand aus der Ebene des Dichtungsstreifens (20, 20a, 20b) herausgebogen sind.

**10.** Dichtungsanordnung nach einem der Ansprüche 2 bis 9, **dadurch gekennzeichnet, dass** zur Aufnahme der Laschen (21) an den entsprechenden Stellen der Nuten (16d, 17d) tiefergehende Taschen (22, 23) ausgebildet sind.

**11.** Dichtungsanordnung nach einem der Ansprüche 1 bis 10, **dadurch gekennzeichnet, dass** die Wände der Nuten (16, 17) senkrecht zum Spalt (18) orientiert sind.

**12.** Dichtungsanordnung nach einem der Ansprüche 1 bis 10, **dadurch gekennzeichnet, dass** die Wände der Nuten (16a, 17a; 16b, 17b) einseitig oder beidseitig schräg zum Spalt (18) orientiert sind, derart, dass die Nuten (16a, 17a; 16b, 17b) ein V-förmiges Querschnittsprofil aufweisen.

**13.** Dichtungsanordnung nach einem der Ansprüche 1 bis 12, **dadurch gekennzeichnet, dass** die Nuten (16, 17) und der Dichtungsstreifen (20) eben ausgebildet sind.

**14.** Dichtungsanordnung nach einem der Ansprüche 1 bis 12, **dadurch gekennzeichnet, dass** die Nuten (16a, 17a; 16b, 17b) und der Dichtungsstreifen (20a, 20b) gebogen ausgebildet sind.

**15.** Dichtungsanordnung nach einem der Ansprüche 1 bis 14, **dadurch gekennzeichnet, dass** die Körper Leitschaufelsegmente (10, 10a, 10b) und/oder Laufschaufelsegmente einer Gasturbine sind.

**Claims**

**1.** Sealing arrangement, in particular for the blade segments of gas turbines, in which sealing arrangement two bodies (10a, 10b), with two end faces (24, 25) which extend along a longitudinal axis (26), adjoin one another while forming a gap (18), the width of which can vary between zero and a maximum width (X), and in which the gap (18) is covered by a sealing strip (20, 20a, 20b) which lies transversely to the gap (18), extends along the longitudinal axis (26) and is mounted with clearance in two opposite grooves (16, 17; 16a, 17a;....; 16d, 17d) of a predetermined depth (T) which are incorporated transversely to the gap (18) in the end faces (24, 25) of the bodies (10a, 10b), the sealing strip (20, 20a, 20b) having a basic width (S) transversely to the longitudinal axis (26), this basic width (S) being less than or equal to twice the depth of the grooves (16, 17; 16a, 17a;....; 16d, 17d), **characterized in that** the sealing strip (20, 20a, 20b) has additional means (21) which prevent the sealing strip (20, 20a, 20b) from slipping out of the grooves (16, 17; 16a, 17a;....; 16d, 17d) if the sum of the maximum width (X) of the gap (18) and the depth (T) of the grooves (16, 17; 16a, 17a;....; 16d, 17d) is greater than or equal to the basic width (S) of the sealing strip (20, 20a, 20b).

**2.** Sealing arrangement according to claim 1, **characterized in that** the additional means comprise lugs (21) which are arranged in a distributed manner on the longitudinal sides of the sealing strip (20, 20a, 20b), are defined in the direction of the longitudinal axis (26) and locally increase the width of the sealing strip (20, 20a, 20b) beyond the basic width (S) by a predetermined additional width (S1, S2).

**3.** Sealing arrangement according to claim 2, **characterized in that** at least two lugs (21) are arranged on a longitudinal side of the sealing strip (20, 20a, 20b) in such a way as to be distributed over the longitudinal side.

**4.** Sealing arrangement according to claim 3, **characterized in that** the at least two lugs (21) are arranged on the ends of the longitudinal side.

**5.** Sealing arrangement according to claim 4, **characterized in that** at least one additional lug (21) is arranged in the center between the at least two lugs (21).

**6.** Sealing arrangement according to one of claims 2 to 5, **characterized in that** the lugs (21) are arranged in pairs opposite one another on the two longitudinal sides of the sealing strip (20, 20a, 20b).

**7.** Sealing arrangement according to one of claims 2 to 6, **characterized in that** the lugs (21) are integrally formed on the sealing strip (20, 20a, 20b) and have the same width as the sealing strip (20, 20a, 20b).

**8.** Sealing arrangement according to one of claims 2 to 7, **characterized in that** the lugs (21) lie in the plane of the sealing strip (20, 20a, 20b) in the initial state.

**9.** Sealing arrangement according to one of claims 2 to 7, **characterized in that** the lugs (21) are bent out of the plane of the sealing strip (20, 20a, 20b) in the initial state.

**10.** Sealing arrangement according to one of claims 2 to 9, **characterized in that**, in order to accommodate the lugs (21), deeper pockets (22, 23) are formed at the corresponding locations of the grooves (16d, 17d).

**11.** Sealing arrangement according to one of claims 1 to 10, **characterized in that** the walls of the grooves (16, 17) are oriented perpendicularly to the gap (18).

**12.** Sealing arrangement according to one of claims 1 to 10, **characterized in that** the walls of the grooves (16a, 17a; 16b, 17b) are oriented obliquely relative to the gap (18) on one side or on both sides in such a way that the grooves (16a, 17a; 16b, 17b) have a V-shaped cross-sectional profile.

**13.** Sealing arrangement according to one of claims 1 to 12, **characterized in that** the grooves (16, 17) and the sealing strip (20) are of flat design.

**14.** Sealing arrangement according to one of claims 1 to 12, **characterized in that** the grooves (16a, 17a, 16b, 17b) and the sealing strip (20a, 20b) are of bent design.

**15.** Sealing arrangement according to one of claims 1 to 14, **characterized in that** the bodies are guide blade segments (10, 10a, 10b) and/or moving blade segments of a gas turbine.

**Revendications**

**1.** Système de joint, en particulier pour des segments d'ailettes de turbines à gaz, dans lequel système de joint deux corps (10a, 10b) sont adjacents l'un à l'autre avec deux côtés frontaux (24, 25) s'étendant le long d'un axe longitudinal (26) en formant un interstice (18), dont la largeur peut varier entre zéro et une largeur maximale (X), et dans lequel l'interstice (18) est recouvert par une bande d'étanchéité (20, 20a, 20b) s'étendant le long de l'axe longitudinal (26) et orientée transversalement à l'interstice (18), qui est montée avec jeu dans deux rainures opposées (16, 17 ; 16a, 17a ; ... ; 16d, 17d) d'une profondeur prédéfinie (T) pratiquées transversalement à l'interstice (18) dans les côtés frontaux (24, 25) des corps (10a, 10b), la bande d'étanchéité (20, 20a, 20b) présentant une largeur de base (S) transversalement à l'axe longitudinal (26), qui est inférieure ou égale au double de la profondeur des rainures (16, 17 ; 16a, 17a ; ... ; 16d, 17d), **caractérisé en ce que** la bande d'étanchéité (20, 20a, 20b) présente des moyens supplémentaires (21) qui empêchent la bande d'étanchéité (20, 20a, 20b) de glisser hors des rainures (16, 17 ; 16a, 17a ; ... ; 16d, 17d) si la somme de la largeur maximale (X) de l'interstice (18) et de la profondeur (T) des rainures (16, 17 ; 16a, 17a ; ... ; 16d, 17d) est supérieure ou égale à la largeur de base (S) de la bande d'étanchéité (20, 20a, 20b).

**2.** Système d'étanchéité selon la revendication 1, **caractérisé en ce que** les moyens supplémentaires comprennent des pattes (21) disposées de manière répartie sur les côtés longitudinaux de la bande d'étanchéité (20, 20a, 20b), limitées dans la direction de l'axe longitudinal (26), qui augmentent localement la largeur de la bande d'étanchéité (20, 20a, 20b) au-delà de la largeur de base (S) d'une largeur supplémentaire prédéfinie (S1, S2).

**3.** Système d'étanchéité selon la revendication 2, **caractérisé en ce qu'**au moins deux pattes (21) sont disposées de manière répartie sur le côté longitudinal, sur un côté longitudinal de la bande d'étanchéité (20, 20a, 20b).

**4.** Système d'étanchéité selon la revendication 3, **caractérisé en ce que** les au moins deux pattes (21) sont disposées aux extrémités du côté longitudinal.

**5.** Système d'étanchéité selon la revendication 4, **caractérisé en ce qu'**au moins une patte supplémentaire (21) est disposée au milieu entre les au moins deux pattes (21).

**6.** Système d'étanchéité selon l'une quelconque des revendications 2 à 5, **caractérisé en ce que** les pattes (21) sont disposées par paires en face les unes des autres au niveau des deux côtés longitudinaux de la bande d'étanchéité (20, 20a, 20b).

**7.** Système d'étanchéité selon l'une quelconque des revendications 2 à 6, **caractérisé en ce que** les pattes (21) sont façonnées sur la bande d'étanchéité (20, 20a, 20b) et présentent la même épaisseur que la bande d'étanchéité (20, 20a, 20b).

**8.** Système d'étanchéité selon l'une quelconque des revendications 2 à 7, **caractérisé en ce que** les pattes (21) se situent dans l'état de départ dans le plan de la bande d'étanchéité (20, 20a, 20b).

**9.** Système d'étanchéité selon l'une quelconque des revendications 2 à 7, **caractérisé en ce que** les pattes (21) sont recourbées hors du plan de la bande d'étanchéité (20, 20a, 20b) dans l'état de départ.

**10.** Système d'étanchéité selon l'une quelconque des revendications 2 à 9, **caractérisé en ce que** pour recevoir les pattes (21), des poches (22, 23) plus profondes sont pratiquées aux emplacements correspondants des rainures (16d, 17d).

**11.** Système d'étanchéité selon l'une quelconque des revendications 1 à 10, **caractérisé en ce que** les parois des rainures (16, 17) sont orientées perpendiculairement à l'interstice (18).

**12.** Système d'étanchéité selon l'une quelconque des revendications 1 à 10, **caractérisé en ce que** les parois des rainures (16a, 17a ; 16b, 17b) sont orientées d'un côté ou des deux côtés obliquement par rapport à l'interstice (18), de telle sorte que les rainures (16a, 17a ; 16b, 17b) présentent un profil en section transversale en forme de V.

**13.** Système d'étanchéité selon l'une quelconque des revendications 1 à 12, **caractérisé en ce que** les rainures (16, 17) et la bande d'étanchéité (20) sont réalisées sous forme plane.

**14.** Système d'étanchéité selon l'une quelconque des revendications 1 à 12, **caractérisé en ce que** les rainures (16a, 17a ; 16b, 17b) et la bande d'étanchéité (20a, 20b) sont réalisées sous forme courbe.

**15.** Système d'étanchéité selon l'une quelconque des revendications 1 à 14, **caractérisé en ce que** les corps sont des segments d'ailettes directrices (10, 10a, 10b) et/ou des segments d'ailettes mobiles d'une turbine à gaz.

Fig. 1

EP 1 595 058 B1

10a 16 24 25 17 10b

S

T    O...X

18    19

a)

**Fig. 2**

19

b)

10a 16 24 25 17 10b

S1    S    S1

T    O...X

21    18 20 21

a)

**Fig. 3**

21

20

b)

EP 1 595 058 B1

10a 16 18 17 10b

a)

O

19

**Fig. 4**

10a 16 18 17 10b

b)

X

19

10a 16 18 17 10b

a)

O

21 20 21

**Fig. 5**

10a 16 18 17 10b

b)

X

21 20 21

EP 1 595 058 B1

Fig. 7

a)

b)

b

b

β

21

20

Fig. 6

a)

b)

c)

10a 21 16 18 20 17 10b

10a 21 16a 18 20 17a 10b

10a 21 16b 18 20 17b 10b

a

a

α

α

Fig. 8                    a)                    b)                    c)

EP 1 595 058 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0896128 A2

- US 3752598 A